# EUROPÄISCHE PATENTSCHRIFT

(11) **EP 3 768 983 B1**
(45) Veröffentlichungstag und Bekanntmachung des Hinweises auf die Patenterteilung: **19.01.2022**
(21) Anmeldenummer: 19720754.1
(22) Anmeldetag: 20.03.2019
(51) Int. Cl.: F16C 33/14, F03D 80/70, F03D 15/00

(54) **WINDKRAFTANLAGENGETRIEBE UND VERFAHREN ZUM HERSTELLEN EINES WINDKRAFTANLAGENGETRIEBES**
WIND TURBINE GEARBOX AND METHOD FOR PRODUCING A WIND TURBINE GEARBOX
TRANSMISSION D'ÉOLIENNE ET PROCÉDÉ DE FABRICATION D'UNE TRANSMISSION D'ÉOLIENNE

(30) Priorität: 23.03.2018 AT 502462018
(43) Veröffentlichungstag der Anmeldung: 27.01.2021
(73) Patentinhaber: Miba Gleitlager Austria GmbH, 4663 Laakirchen (AT)
(72) Erfinder: HÖLZL, Johannes Sebastian, 4880 Berg im Attergau (AT); SCHRÖTTENHAMER, Werner, 4702 Wallern (AT)
(74) Vertreter: Burger, Hannes
(86) Internationale Anmeldenummer: PCT/AT2019/060096
(87) Internationale Veröffentlichungsnummer: WO 2019/178630

(56) Entgegenhaltungen:
- EP-A1- 2 383 480
- WO-A2-2014/128196
- US-A1- 2015 133 260

## Beschreibung

Die Erfindung betrifft ein Windkraftanlagengetriebe, sowie eine mit dem Windkraftanlagengetriebe ausgestattete Windkraftanlage, sowie ein Verfahren zum Herstellen des Windkraftanlagengetriebes.

Planetengetriebe für Windkraftanlagen zur Erzeugung von elektrischem Strom, sind zum Beispiel aus der DE 102 60 132 A1 bekannt. Üblicherweise werden in derartigen Planetengetrieben, wie dies ebenfalls in der DE 102 60 132 A1 beschrieben ist, Wälzlager als Lagerelemente für die Planetenräder verwendet. Der Stand der Technik beschreibt aber auch Gleitlager als Lagerelemente, beispielsweise die EP 1 544 504 A2 oder die AT 509 624 A1. Als Gleitlager werden dabei üblicherweise Gleitlagerbüchsen verwendet, die auf die Achse aufgeschrumpft oder in das Planetenrad eingepresst sind. Der Austausch derartiger Gleitlager im Falle einer Wartung oder im Falle von Verschleiß ist aufwändig und damit kostenintensiv. US 2015/133260 A1 offenbart die Merkmale des Oberbegriffs von Anspruch 1.

Aufgabe der vorliegenden Erfindung war es, die Nachteile des Standes der Technik zu überwinden und ein verbessertes Windkraftanlagengetriebe, sowie eine verbesserte Windkraftanlage anzugeben. Weiters war es die Aufgabe der Erfindung ein verbessertes Verfahren zum Herstellen eines Windkraftanlagengetriebes anzugeben.

Diese Aufgabe wird durch ein Windkraftanlagengetriebe und ein Verfahren gemäß den Ansprüchen gelöst.

Die Erfindung betrifft ein Windkraftanlagengetriebe, insbesondere Planetengetriebe, mit zumindest einem Zahnrad, das auf einer Achse gelagert ist, wobei zwischen dem Zahnrad und der Achse oder zwischen der Achse und einer Achsaufnahme eine Gleitoberfläche angeordnet ist. Die Gleitoberfläche ist an zumindest einer Schicht eines auftraggeschweißten Materials aus einem Gleitlagerwerkstoff angeordnet.

Von Vorteil an dem erfindungsgemäßen Windkraftanlagengetriebe ist, dass durch die auftaggeschweißte Gleitschicht die Wartung des Gleitlagers insofern vereinfacht werden kann, da damit das Gleitlager durch relativ einfach realisierbaren Ausbau der Achse zugänglich wird. Dies kann sogar auf dem Turm der Windkraftanlage erfolgen, wodurch Zeit und damit Kosten eingespart werden können. Darüber hinaus hat die auftaggeschweißte Gleitschicht im Vergleich zu Gleitlagerbüchsen den Vorteil, dass Positionsverluste der Gleitlagerung durch Kriech- und Relaxationseffekte ausgeschlossen werden können. Außerdem ist durch die erfindungsgemäße auftaggeschweißte Gleitschicht das Windkraftanlagengetriebe einfach und kostengünstig herzustellen.

Grundsätzlich sind zwei verschiedene Ausführungsbeispiele der Gleitlagerung zur drehbaren Lagerung des Zahnrades möglich. In einem ersten Ausführungsbeispiel kann das Zahnrad relativ zur Achse verdrehbar mittels einer Gleitlagerung an dieser gelagert sein. Die Achse kann hierbei fest in einer Achsaufnahme aufgenommen sein. Weiters kann vorgesehen sein, dass eine Gleitlagerbuchse zwischen der Achse und dem Zahnrad angeordnet ist. In einem zweiten Ausführungsbeispiel kann das Zahnrad fest an der Achse aufgenommen sein und die Achse mitsamt dem Zahnrad drehbar in der Achsaufnahme aufgenommen sein. Weiters kann vorgesehen sein, dass eine Gleitlagerbuchse zwischen der Achse und der Achsaufnahme angeordnet ist.

Weiters ist erfindungsgemäß vorgesehen, dass die Schicht des auftraggeschweißten Materials direkt auf eine Außenmantelfläche der Achse aufgebracht ist. Dies bringt den Vorteil mit sich, dass eine derartige Schicht einfach herzustellen ist.

Ferner kann vorgesehen sein, dass an der Achse ein Absatz angeordnet ist und die Schicht des auftraggeschweißten Materials direkt auf eine Stirnfläche des Absatzes aufgebracht ist. Durch diese Maßnahme kann neben der Radiallagerung auch eine Axiallagerung erreicht werden.

Darüber hinaus kann vorgesehen sein (nicht beansprucht), dass die Schicht des auftraggeschweißten Materials direkt auf eine Innenmantelfläche einer Bohrung des Zahnrades aufgebracht ist. Dies kann ebenfalls Vorteile mit sich bringen, da bei einem derartigen Ausführungsbeispiel die Achse nicht bearbeitet werden muss.

In wieder einer anderen Ausführungsvariante kann auch vorgesehen sein (nicht beansprucht), dass die Schicht des auftraggeschweißten Materials direkt auf eine Innenmantelfläche einer Bohrung in der Achsaufnahme aufgebracht ist.

In wieder einer andern Ausführungsvariante kann auch vorgesehen sein, dass zwischen der Achsaufnahme und der Achse eine Gleitlagerbuchse angeordnet ist, wobei die Schicht des auftraggeschweißten Materials direkt auf die Gleitlagerbuchse aufgebracht ist.

Vorteilhaft (nicht beansprucht) ist auch eine Ausprägung, gemäß welcher vorgesehen sein kann, dass die Schicht des auftraggeschweißten Materials direkt auf eine Stirnfläche des Zahnrades aufgebracht ist. Durch diese Maßnahme kann eine Axiallagerung des Zahnrades erreicht werden.

Gemäß einer Weiterbildung (nicht beansprucht) ist es möglich, dass zwischen dem Zahnrad und der Achse eine Gleitlagerbuchse angeordnet ist, wobei die Schicht des auftraggeschweißten Materials direkt auf die Gleitlagerbuchse aufgebracht ist. Von Vorteil ist hierbei, dass eine Gleitlagerbuchse einfach mit dem auftraggeschweißten Material beschichtet werden kann.

Ferner kann es zweckmäßig sein (nicht beansprucht), wenn die Schicht des auftraggeschweißten Materials direkt auf eine Innenmantelfläche einer Bohrung der Gleitlagerbuchse aufgebracht ist und die Gleitlagerbuchse in einer Bohrung im Zahnrad aufgenommen ist. Eine Gleitlagerbuchse kann einfach in die Bohrung des Zahnrades eingepresst werden.

Darüber hinaus kann vorgesehen sein (nicht beansprucht), dass die Schicht des auftraggeschweißten Materials direkt auf eine Außenmantelfläche der Gleitlagerbuchse aufgebracht ist und die Gleitlagerbuchse auf der Achse aufgenommen ist. Die Gleitlagerbuchse kann einfach auf die Achse aufgebracht werden. Insbesondere kann vorgesehen sein, dass die Gleitlagerbuchse auf die Achse aufgepresst ist. Alternativ dazu kann auch vorgesehen sein, dass die Gleitlagerbuchse beispielsweise durch Aufschrumpfen auf die Achse aufgebracht ist. Beim Herstellen einer derartigen Verbindung kann vorgesehen sein, dass die Gleitlagerbuchse zuerst auf die Achse aufgeschrumpft wird und anschließend die Schicht des auftraggeschweißten Materials auftraggeschweißt wird. In einer Alternativvariante kann auch vorgesehen sein, dass zuerst die Schicht des auftraggeschweißten Materials auf die Gleitlagerbuchse auftraggeschweißt wird und anschließend die Gleitlagerbuchse auf die Achse aufgepresst und/oder aufgeschrumpft wird.

Weiters kann vorgesehen sein (nicht beansprucht), dass die Schicht des auftraggeschweißten Materials direkt auf eine Stirnfläche der Gleitlagerbuchse aufgebracht ist. Durch diese Maßnahme kann eine Axiallagerung realisiert werden.

Gemäß einer besonderen Ausprägung ist es möglich, dass das Zahnrad als Planetenrad ausgebildet ist. Besonders in einem Planetengetriebe bringt die erfindungsgemäße Art der Gleitlagerung große Vorteile mit sich.

Entsprechend einer vorteilhaften Weiterbildung kann vorgesehen sein, dass die Schicht des auftraggeschweißten Materials eine Schichtdicke zwischen 0,5mm und 1,5mm, insbesondere zwischen 0,8mm und 1,2mm aufweist. Eine derartige Schichtdicke bringt den Vorteil mit sich, dass sie gute Gleiteigenschaften aufweisen kann, dabei verfahrenstechnisch gut herzustellen ist und darüber hinaus eine ausreichende Lebensdauer aufweisen kann.

Die Schichtdicke bemisst sich von der Oberfläche des Werkstückes vor dem Auftragschweißvorgang auf die Gleitoberfläche.

Insbesondere kann es vorteilhaft sein, wenn die Gleitoberfläche an der Schicht des auftraggeschweißten Materials eine gemittelte Rautiefe R_{z} zwischen 0,1 µm und 3,2 µm, insbesondere zwischen 0,5 µm und 1,6 µm aufweist. Besonders Oberflächen mit einer derartigen gemittelten Rautiefe R_{z} bringen gute Gleiteigenschaften mit sich und sind darüber hinaus an der Schicht des auftraggeschweißten Materials einfach herzustellen.

Ferner kann vorgesehen sein, dass das auftraggeschweißte Material aus einem Werkstoff besteht oder diesen umfasst, der ausgewählt ist aus einer Gruppe umfassend Aluminiumbasislegierungen, Zinnbasislegierungen, Bronzebasislegierungen, Messingbasislegierungen. Besonders derartige Werkstoffe bringen gute Gleiteigenschaften mit sich.

Darüber hinaus kann vorgesehen sein, dass das auftraggeschweißte Material aus einem Werkstoff besteht oder diesen umfasst, der zumindest zwei Werkstoffe umfasst, die ausgewählt sind aus einer Gruppe umfassend Aluminium, Zinn, Bronze, Messing. Eine derartige Kombination aus mehreren Werkstoffen bringt den Vorteil mit sich, dass verschiedene positive Eigenschaften der einzelnen Werkstoffe vereint werden können, um neben guten Gleiteigenschaften auch eine große Langzeitbeständigkeit aufweisen zu können.

Vorteilhaft ist auch eine Ausprägung, gemäß welcher vorgesehen sein kann, dass in einem axialen Abstand zueinander versetzt zumindest zwei Schichten des auftraggeschweißten Materials aus unterschiedlichen Werkstoffen ausgebildet sind. Hierdurch können verschiedene Materialien mit verschieden Materialeigenschaften miteinander kombiniert werden.

Gemäß einer Weiterbildung ist es möglich, dass in einem axialen Abstand zueinander versetzt zumindest drei Schichten des auftraggeschweißten Materials aus unterschiedlichen Werkstoffen ausgebildet sind, wobei die Materialen der beiden außenliegenden Schichten eine geringere Druckfestigkeit aufweisen, als das Material einer dazwischenliegenden Schicht. Durch diese Maßnahme kann die Gleitlagerung gute Einlaufeigenschaften aufweisen.

Weiters ist eine Windkraftanlage mit einem Rotor und einem Generator vorgesehen, wobei zwischen dem Rotor und dem Generator ein Windkraftanlagengetriebe, insbesondere ein Planetengetriebe, angeordnet ist, das in Wirkverbindung mit dem Rotor und dem Generator steht. Das Windkraftanlagengetriebe ist entsprechend den obigen Ausführungen ausgebildet.

Weiters ist ein Verfahren zum Herstellen eines Windkraftanlagengetriebes, insbesondere Planetengetriebes, mit zumindest einem Zahnrad, das auf einer Achse gelagert ist vorgesehen, wobei zwischen dem Zahnrad und der Achse eine Gleitoberfläche angeordnet ist. Das Verfahren umfasst folgende Verfahrensschritte:
- Bereitstellen des Zahnrades oder der Achse oder einer Gleitlagerbuchse;
- Auftragschweißen eines Gleitlagerwerkstoffes und dadurch Aufbringen einer Schicht eines auftraggeschweißten Materials direkt auf das Zahnrad oder die Achse oder eine Gleitlagerbuchse;
- Bilden der Gleitoberfläche an der Schicht.

Das Verfahren weist den Vorteil auf, dass es einfach durchzuführen ist.

Weiters kann vorgesehen sein, dass beim Auftragschweißen die Schicht des auftraggeschweißten Materials in einer Rohschichtdicke zwischen 1mm und 5mm, insbesondere zwischen 1,5mm und 3mm aufgetragen wird und dass die Schicht des auftraggeschweißten Materials in einem anschließenden Bearbeitungsschritt mittels spanabhebender Bearbeitung auf eine Schichtdicke zwischen 0,5mm und 1,5mm, insbesondere zwischen 0,8mm und 1,2mm abgetragen wird. Dies bringt den Vorteil mit sich, dass die Schicht effizient hergestellt werden kann und anschließend die Gleitoberfläche eine ausreichende Oberflächenqualität aufweisen kann.

Gemäß einer besonderen Ausprägung ist es möglich, dass das Auftragschweißen und die spanabhebende Bearbeitung in einer Werkstückaufspannung erfolgt. Dies bringt den Vorteil mit sich, dass das Werkstück an welchem die Schicht auftraggeschweißt wird, zwischen den einzelnen Bearbeitungsvorgängen nicht neu in einer Werkstückaufnahme gespannt werden muss. Dies reduziert einerseits die Nebenzeiten und darüber hinaus können auch die Toleranzabweichungen, welche durch eine Neuspannung bedingt sind, möglichst gering gehalten werden.

Weiters kann vorgesehen sein, dass eine spanabhebende Bearbeitung zum Vorbereiten einer Fläche für das Auftragschweißen ebenfalls in der selben Werkstückaufspannung erfolgt.

Insbesondere kann vorgesehen sein, dass beispielsweise die Achse in einem Dreibackenfutter einer Drehmaschine gespannt wird. In einem ersten Verfahrensschritt kann die Achse an dessen Außenumfang abgedreht werden, sodass eine Oberfläche bereitgestellt wird, an welcher das Material auftraggeschweißt werden kann. Anschließend kann mittels Auftragschweißen eine Materialschicht auf die bereitgestellte Oberfläche aufgebracht werden. Dies kann in derselben Aufspannung erfolgen, wobei ein Schweißroboter in den Bereich der Drehmaschine geführt werden kann in dem das Werkstück gespannt ist. In einem anschließenden Verfahrensschritt kann in derselben Aufspannung das auftraggeschweißte Material teilweise abgedreht werden, um die Gleitoberfläche zur Verfügung zu stellen.

In wieder einem anderen Ausführungsbeispiel kann auch vorgesehen sein, dass die vorstehend beschriebenen Verfahrensschritte angewandt werden, um eine Schicht eines auftraggeschweißten Materials auf das Zahnrad aufzubringen.

In wieder einem anderen Ausführungsbeispiel kann auch vorgesehen sein, dass die vorstehend beschriebenen Verfahrensschritte angewandt werden, um eine Schicht eines auftraggeschweißten Materials auf die Gleitlagerbuchse aufzubringen.

Weiters kann vorgesehen sein, dass sowohl an der Achse eine Gleitoberfläche mittels einer Schicht eines auftraggeschweißten Materials aus einem Gleitlagerwerkstoff aufgebracht wird, als auch am Zahnrad eine Gleitoberfläche mittels einer Schicht eines auftraggeschweißten Materials aus einem Gleitlagerwerkstoff aufgebracht wird. Die Gleitoberflächen der Achse und des Zahnrades können im Zusammengebauten Zustand des Windkraftanlagengetriebes direkt aneinander anliegen.

Weiters kann vorgesehen sein, dass nach dem Auftragschweißen und Bilden der Gleitoberfläche die einzelnen Bauteile des Windkraftanlagengetriebes zusammengebaut werden.

Weiters kann vorgesehen sein, dass Laserauftragschweißen, insbesondere Laser-Pulver-Auftragschweißen, als Schweißverfahren verwendet wird.

Es ist weiter möglich, dass auf der Gleitschicht eine polymerbasierte Einlaufschicht angeordnet ist, um damit eine bessere Anpassungsfähigkeit der Gleitlagerlauffläche an die Gegenlauffläche während des Einlaufens des Gleitschicht zu erreichen, wobei zusätzlich von Vorteil ist, dass diese Einlaufschicht ebenfalls die Tribologie des Gleitlagers an sich verbessert. Dabei ist von Vorteil, dass diese polymerbasierte Einlaufschicht mit einem Sprühverfahren aufgetragen werden kann.

Als Auftragschweißen oder Cladding nach DIN 8590 - "Beschichten durch Schweißen" wird ein Schweißvorgang bezeichnet, bei dem ausschließlich durch den Schweißzusatzwerkstoff, wie etwa Draht oder Pulver, ein Volumenaufbau, meist in Form einer Deckschicht, stattfindet. Hierbei wird die Bauteiloberfläche, auf die auftraggeschweißt wird, angeschmolzen. Es zählt somit zu den Oberflächenbeschichtungsverfahren.

Die Verfahren des Thermischen Spritzens zählen ebenfalls zu den Oberflächenbeschichtungsverfahren. Laut der normativen Definition (DIN EN 657) werden dabei Zusatzwerkstoffe, die so genannten Spritzzusätze, innerhalb oder außerhalb eines Spritzbrenners ab-, an- oder aufgeschmolzen, in einem Gasstrom in Form von Spritzpartikeln beschleunigt und auf die Oberfläche des zu beschichtenden Bauteils geschleudert. Die Bauteiloberfläche wird dabei im Gegensatz zum Auftragschweißen nicht angeschmolzen und nur in geringem Maße thermisch belastet. Somit sind die Verfahren des Auftragschweißen und des Thermischen Spritzens auch eindeutig voneinander zu unterscheiden.

Zum besseren Verständnis der Erfindung wird diese anhand der nachfolgenden Figuren näher erläutert.

Es zeigen jeweils in stark vereinfachter, schematischer Darstellung:
- Fig. 1: eine Windkraftanlage in Seitenansicht;
- Fig. 2: ein Windkraftanlagengetriebe in Form eines Planetengetriebes in Seitenansicht geschnitten;
- Fig. 3: ein erstes Ausführungsbeispiel einer Gleitlagerung mit einer auf die Achse auftraggeschweißten Schicht;
- Fig. 4: ein zweites Ausführungsbeispiel einer Gleitlagerung mit mehreren auf die Achse auftraggeschweißten Schichten;
- Fig. 5: ein drittes Ausführungsbeispiel einer Gleitlagerung mit einer auf die Achse auftraggeschweißten Schicht, welche ebenfalls stirnseitig angeordnet ist;
- Fig. 6: ein viertes und ein fünftes Ausführungsbeispiel einer Gleitlagerung mit einer auf das Zahnrad auftraggeschweißten Schicht;
- Fig. 7: ein sechstes und ein siebtes Ausführungsbeispiel einer Gleitlagerung mit einer zwischen dem Zahnrad und der Achse angeordneten Hülse, auf welche die Schicht auftraggeschweißt ist;
- Fig. 8: ein achtes Ausführungsbeispiel einer Gleitlagerung mit einer zwischen dem Zahnrad und der Achse angeordneten Hülse, auf welche die Schicht auch stirnseitig auftraggeschweißt ist;
- Fig. 9: ein neuntes und ein zehntes Ausführungsbeispiel einer Gleitlagerung mit einer Schicht die auf die Achsaufnahme bzw. die Achse auftraggeschweißt ist;
- Fig. 10: eine schematische Darstellung der Verfahrensschritte zur Herstellung einer auftraggeschweißten Gleitlagerschicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

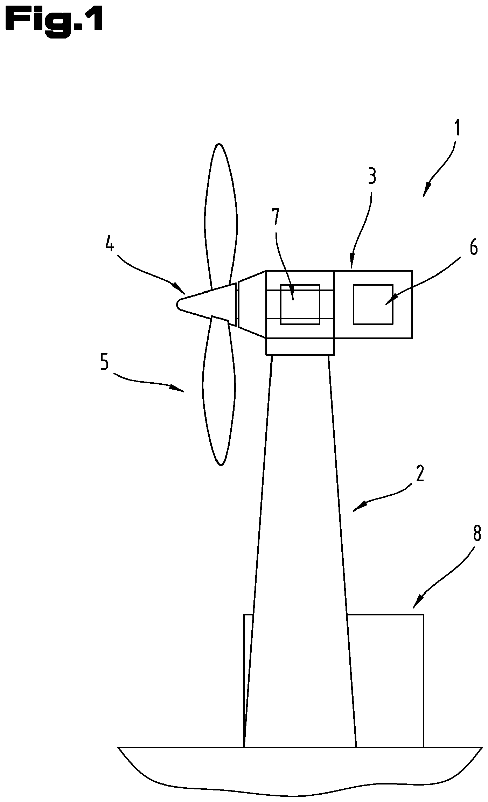

Fig. 1 zeigt eine Windkraftanlage 1. Diese Windkraftanlage 1 entspricht prinzipiell dem Stand der Technik, d.h. sie umfasst einen Turm 2 auf dem eine Gondel 3 angeordnet ist, an deren vorderen Ende ein Rotor 4 mit Rotorblättern 5 und an deren hinterem Ende ein Generator 6 angeordnet ist. Zwischen dem Rotor 4 und dem Generator 6, d.h. einem nicht weiter dargestellten Läufer des Generators, ist ein Windkraftanlagengetriebe 7 angeordnet, das einerseits mit dem Rotor 4 und andererseits dem Läufer des Generators 6 verbunden ist. Das Windkraftanlagengetriebe 7 dient der Erhöhung der Drehzahl des Läufers im Vergleich zum Rotor 4. Am unteren Teil des Turms 2 ist schließlich noch ein Netzanschluss 8 vorhanden. Da diese Bestandteile prinzipiell aus dem Stand der Technik für Windkraftanlagen 1 bekannt sind, sei an dieser Stelle auf die einschlägige Literatur hierzu verwiesen. Es sei jedoch erwähnt, dass die Windkraftanlage 1 nicht zwingend auf den in Fig. 1 dargestellten Typ beschränkt ist.

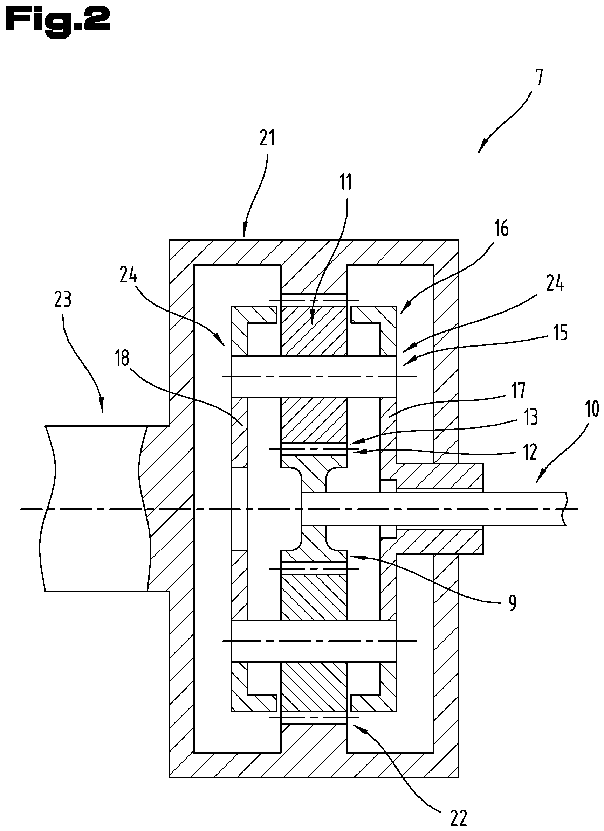

Fig. 2 zeigt das Windkraftanlagengetriebe 7 in Form eines einfachen Planetengetriebes in Seitenansicht geschnitten.

Das Planetengetriebe 7 weist ein Sonnenrad 9 auf, das mit einer Welle 10, die zum Generatorrotor führt, bewegungsgekoppelt ist. Das Sonnenrad 9 ist von mehreren Planetenrädern 11, beispielsweise zwei, vorzugsweise drei oder vier, umgeben. Sowohl das Sonnenrad 9 als auch die Planetenräder 11 weisen außenliegende Stirnverzahnungen 12, 13 auf, die in kämmenden Eingriff miteinander stehen, wobei diese Stirnverzahnungen 12, 13 in Fig. 2 schematisch dargestellt sind.

Die Planetenräder 11 werden in diesem Dokument allgemein auch als Zahnrad 14 bezeichnet. Die Gruppe der Zahnräder 14 kann neben den Planetenrädern 11 auch weitere Zahnräder umfassen.

Die Planetenräder 11 sind mittels einer Planetenradachse 15 im Planetenträger 16 gelagert, wobei im Planetenträger 16 ein erster Aufnahmeabschnitt 17 und ein zweiter Aufnahmeabschnitt 18 vorgesehen sind, in welchen die Planetenradachse 15 aufgenommen, insbesondere geklemmt ist. Die beiden Aufnahmeabschnitte 17, 18 werden allgemein auch als Achsaufnahme 24 bezeichnet.

In einem alternativen Ausführungsbeispiel kann auch vorgesehen sein, dass die Planetenräder 11 fest mit einer Planetenradachse 15 gekoppelt sind und die Planetenradachse 15 drehbar in der Achsaufnahme 24 aufgenommen sind.

Die Planetenradachsen 15 werden in diesem Dokument allgemein auch als Achse 19 bezeichnet. Die Gruppe der Achsen 19 kann neben den Planetenradachsen 15 auch weitere Achsen umfassen.

Die Planetenräder 11 umgebend ist ein Hohlrad 21 angeordnet, welches eine Innenverzahnung 22 aufweist, die in kämmendem Eingriff mit der Stirnverzahnung 13 der Planetenräder 11 steht. Das Hohlrad 21 ist mit einer Rotorwelle 23 des Rotors der Windkraftanlage bewegungsgekoppelt. Die Stirnverzahnungen 12, 13 bzw. die Innenverzahnung 22 können als Geradverzahnung, als Schrägverzahnung oder als Doppelschrägverzahnung ausgeführt sein.

Da derartige Planetengetriebe 7 dem Prinzip nach ebenfalls bereits aus dem Stand der Technik bekannt sind, beispielsweise aus dem voranstehend zitierten Dokument zum Stand der Technik, erübrigt sich eine weitere Erörterung an dieser Stelle.

Es sei darauf hingewiesen, dass im Folgenden hinsichtlich des Planetenrades 11 die Einzahl verwendet wird. Es versteht sich aber von selbst, dass in der bevorzugten Ausführung sämtliche Planetenräder 11 erfindungsgemäß ausgebildet sind.

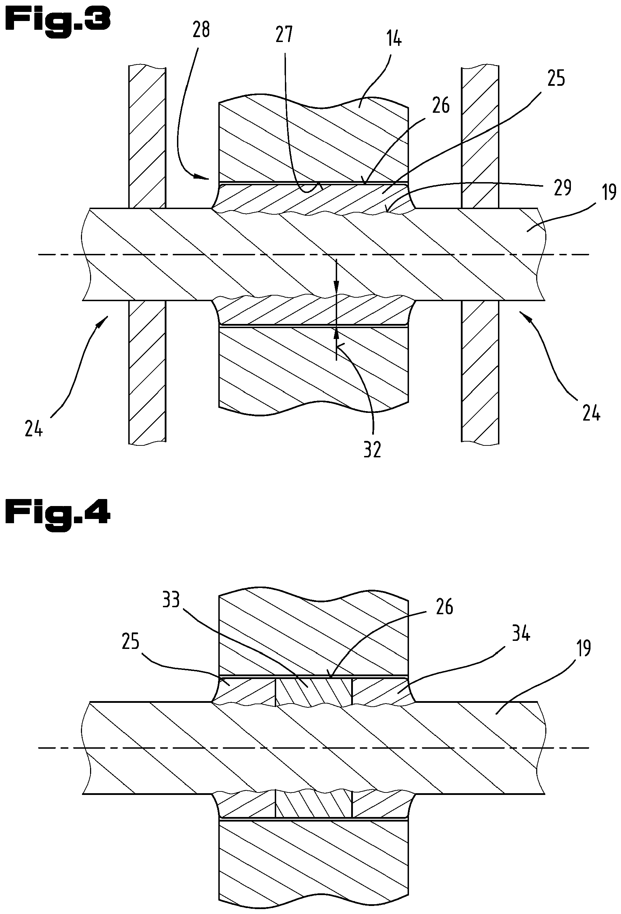

In den Figuren 3 bis 9 verschiedene und für sich eigenständige Ausführungsformen der Gleitlagerung gezeigt, wobei wiederum für gleiche Teile gleiche Bezugszeichen bzw. Bauteilbezeichnungen wie in den jeweils vorangegangenen Figuren verwendet werden. Um unnötige Wiederholungen zu vermeiden, wird auf die detaillierte Beschreibung in den jeweils vorangegangenen Figuren hingewiesen bzw. Bezug genommen.

Fig. 3 zeigt eine schematische Darstellung eines ersten Ausführungsbeispiels einer Gleitlagerung zur Lagerung des Zahnrades 14.

Wie aus Fig. 3 ersichtlich, kann vorgesehen sein, dass an der Achse 19 eine Schicht 25 eines auftraggeschweißten Materials aus einem Gleitlagerwerkstoff angeordnet ist. An der Schicht 25 ist eine Gleitoberfläche 26 ausgebildet, mit welcher eine Innenmantelfläche 27 einer Bohrung 28 des Zahnrades 14 direkt zusammenwirken kann. Beim Ausführungsbeispiel nach Fig. 3 ist somit das Zahnrad 14 relativ zur Achse 19 verdrehbar an dieser gelagert.

Insbesondere kann vorgesehen sein, dass die Schicht 25 des auftraggeschweißten Materials direkt auf eine Außenmantelfläche 29 der Achse 19 durch Auftragschweißen aufgebracht wurde.

Die Achse 19 ist beim Ausführungsbeispiel nach Fig. 3 fest in der Achsaufnahme 24 aufgenommen und somit nicht relativ zur Achsaufnahme 24 verdrehbar. Insbesondere kann vorgesehen sein, dass die Achse 19 direkt an einer Innenmantelfläche 30 einer Bohrung 31 der Achsaufnahme 24 anliegt. Die Schicht 25 des auftraggeschweißten Materials kann eine Schichtdicke 32 zwischen 0,2 mm und 5 mm aufweisen.

In der Fig. 4 ist eine weitere und gegebenenfalls für sich eigenständige Ausführungsform der Gleitlagerung gezeigt, wobei wiederum für gleiche Teile gleiche Bezugszeichen bzw. Bauteilbezeichnungen wie in den vorangegangenen Figuren 2 und 3 verwendet werden. Um unnötige Wiederholungen zu vermeiden, wird auf die detaillierte Beschreibung in den vorangegangenen Figuren 2 und 3 hingewiesen bzw. Bezug genommen.

In dem Ausführungsbeispiel nach Fig. 4 sind eine erste Schicht 25, eine zweite Schicht 33 und eine dritte Schicht 34 auf die Achse 19 auftraggeschweißt, wobei die einzelnen Schichten 25, 33, 34 unterschiedliche Materialeigenschaften aufweisen. Insbesondere kann vorgesehen sein, dass die beiden außenliegenden Schichten 25, 34 eine geringere Druckfestigkeit bzw. eine geringere Oberflächenhärte als das Material der dazwischen liegenden Schicht 33 aufweist. Die einzelnen Schichten 25, 33, 34 können eine einheitliche Schichtdicke 32 aufweisen, sodass eine durchgängige Gleitoberfläche 26 ausgebildet ist. Alternativ kann auch vorgesehen sein, dass die Schichtdicken 32 der einzelnen Schichten 25, 33, 34 geringfügig unterschiedlich sind, sodass beispielsweise die beiden außenliegenden Schichten 25, 34 eine geringfügig höhere Schichtdicke 32 aufweisen, wodurch die Einlaufeigenschaften der Gleitlagerung verbessert werden kann.

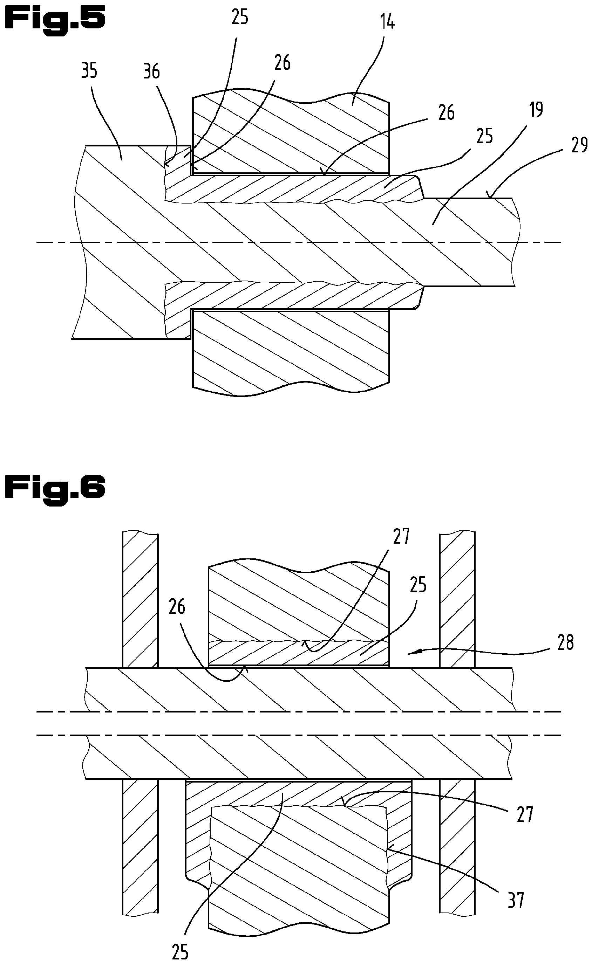

In der Fig. 5 ist eine weitere und gegebenenfalls für sich eigenständige Ausführungsform der Gleitlagerung zur Lagerung des Zahnrades 14 gezeigt, wobei wiederum für gleiche Teile gleiche Bezugszeichen bzw. Bauteilbezeichnungen wie in den vorangegangenen Figuren 2 bis 4 verwendet werden. Um unnötige Wiederholungen zu vermeiden, wird auf die detaillierte Beschreibung in den vorangegangenen Figuren 2 bis 4 hingewiesen bzw. Bezug genommen. Wie aus Fig. 5 ersichtlich, kann vorgesehen sein, dass die Achse 19 einen Absatz 35 aufweist, welcher eine Stirnfläche 36 ausbildet. Die Schicht 25 des auftraggeschweißten Materials kann sowohl an der Außenmantelfläche 29 als auch an der Stirnfläche 36 der Achse 19 angeordnet sein. Durch diese Maßnahme kann zusätzlich zur Radiallagerung auch eine Axiallagerung des Zahnrades 14 erreicht werden.

In der Fig. 6 sind zwei weitere und gegebenenfalls für sich eigenständige Ausführungsformen der Gleitlagerung gezeigt, wobei wiederum für gleiche Teile gleiche Bezugszeichen bzw. Bauteilbezeichnungen wie in den vorangegangenen Figuren 2 bis 5 verwendet werden. Um unnötige Wiederholungen zu vermeiden, wird auf die detaillierte Beschreibung in den vorangegangenen Figuren 2 bis 5 hingewiesen bzw. Bezug genommen.

In der oberen Schnitthälfte der Fig. 6 ist die erste Schicht 25 des auftraggeschweißten Materials direkt auf die Innenmantelfläche 27 der Bohrung 28 des Zahnrades 14 aufgebracht. Die Gleitoberfläche 26 ist somit am Zahnrad 14 angeordnet. Die Achse 19 braucht bei einem derartigen Ausführungsbeispiel keine Oberflächenbeschichtung aufweisen.

In der unteren Schnitthälfte der Fig. 6 ist ein ähnliches Ausführungsbeispiel wie in der oberen Schnitthälfte dargestellt, wobei bei diesem Ausführungsbeispiel zusätzlich zur Innenmantelfläche 27 der Bohrung 28 des Zahnrades 14 auch an der Stirnfläche 37 des Zahnrades 14 die Schicht 25 des auftraggeschweißten Materials aufgebracht ist. Bei einem derartigen Ausführungsbeispiel kann neben der Radiallagerung des Zahnrades 14 auch eine Axiallagerung des Zahnrades 14 erreicht werden.

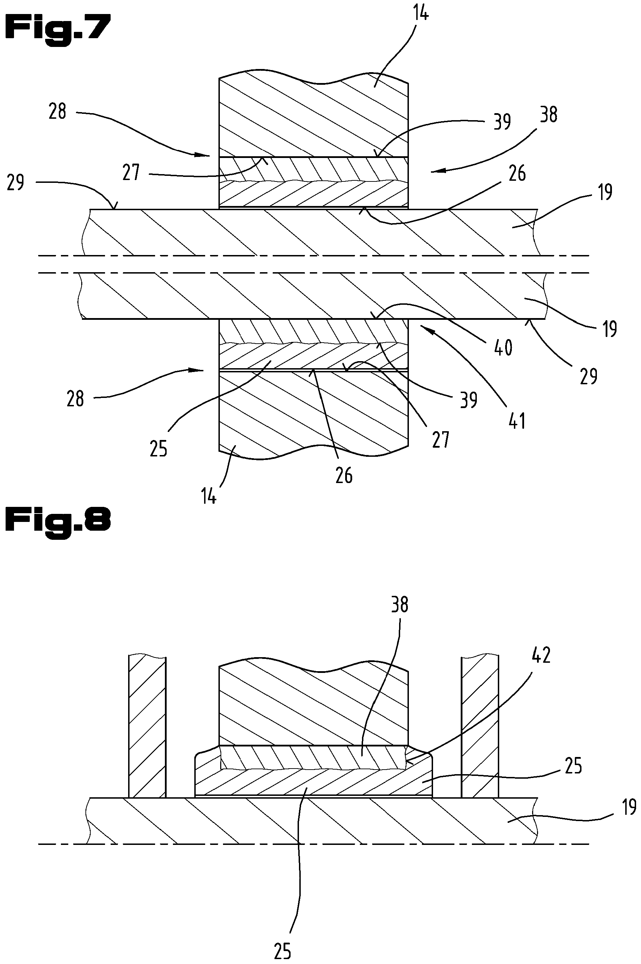

In der Fig. 7 sind zwei weitere und gegebenenfalls für sich eigenständige Ausführungsformen der Gleitlagerung gezeigt, wobei wiederum für gleiche Teile gleiche Bezugszeichen bzw. Bauteilbezeichnungen wie in den vorangegangenen Figuren 2 bis 6 verwendet werden. Um unnötige Wiederholungen zu vermeiden, wird auf die detaillierte Beschreibung in den vorangegangenen Figuren 2 bis 6 hingewiesen bzw. Bezug genommen.

In Fig. 7 ist ebenfalls in der oberen Schnitthälfte ein erstes Ausführungsbeispiel dargestellt ist und in der unteren Schnitthälfte ein zweites Ausführungsbeispiel dargestellt.

Im Ausführungsbeispiel der oberen Schnitthälfte der Fig. 7 ist zwischen dem Zahnrad 14 und der Achse 19 eine Gleitlagerbuchse 38 angeordnet. Eine Außenmantelfläche 39 der Gleitlagerbuchse 38 kann hierbei direkt an der Innenmantelfläche 27 der Bohrung 28 des Zahnrades 14 anliegen. Insbesondere kann vorgesehen sein, dass die Gleitlagerbuchse 38 in das Zahnrad 14 eingepresst ist. Die Schicht 25 des auftraggeschweißten Materials kann hierbei an einer Innenmantelfläche 40 einer Bohrung 41 der Gleitlagerbuchse 38 angeordnet sein. Die Gleitoberfläche 26, welche in diesem Fall an der Gleitlagerbuchse 38 ausgebildet ist, kann so direkt an der Außenmantelfläche 29 der Achse 19 anliegen. Die Gleitlagerbuchse 38 ist in diesem Ausführungsbeispiel fest mit dem Zahnrad 14 gekoppelt und dreht sich mit diesem mit.

Im zweiten Ausführungsbeispiel der Fig. 7, welches in der unteren Schnitthälfte dargestellt ist, liegt die Innenmantelfläche 40 der Bohrung 41 der Gleitlagerbuchse 38 direkt an der Außenmantelfläche 29 der Achse 19 an und ist die Gleitlagerbuchse 38 somit fest an der Achse 19 aufgenommen. Die Schicht 25 des auftraggeschweißten Materials ist hierbei an der Außenmantelfläche 39 der Gleitlagerbuchse 38 angeordnet. Die Gleitoberfläche 26 wirkt direkt mit der Innenmantelfläche 27 der Bohrung 28 des Zahnrades 14 zusammen, wobei das Zahnrad 14 relativ zur Gleitlagerbuchse 38 und somit auch zur Achse 19 verdrehbar ist.

In der Fig. 8 ist eine weitere und gegebenenfalls für sich eigenständige Ausführungsform der Gleitlagerung zur Lagerung des Zahnrades 14 gezeigt, wobei wiederum für gleiche Teile gleiche Bezugszeichen bzw. Bauteilbezeichnungen wie in den vorangegangenen Figuren 2 bis 7 verwendet werden. Um unnötige Wiederholungen zu vermeiden, wird auf die detaillierte Beschreibung in den vorangegangenen Figuren 2 bis 7 hingewiesen bzw. Bezug genommen.

Fig. 8 zeigt ein ähnliches Ausführungsbeispiel der Gleitlagerung, wie es in der oberen Schnitthälfte der Fig. 7 dargestellt ist. Im Ausführungsbeispiel der Fig. 8 ist zusätzlich an der Stirnfläche 42 der Gleitlagerbuchse 38 eine Schicht 25 des auftraggeschweißten Materials angeordnet. Eine derartig ausgebildete Gleitlagerbuchse 38 kann somit neben den Radiallagereigenschaften auch Axiallagereigenschaften aufweisen.

Bei den Ausführungsbeispielen nach Fig. 7 und Fig. 8 können natürlich auch mehrere Schichten 25, 33, 34 des auftraggeschweißten Materials analog zu Fig. 4 ausgebildet sein.

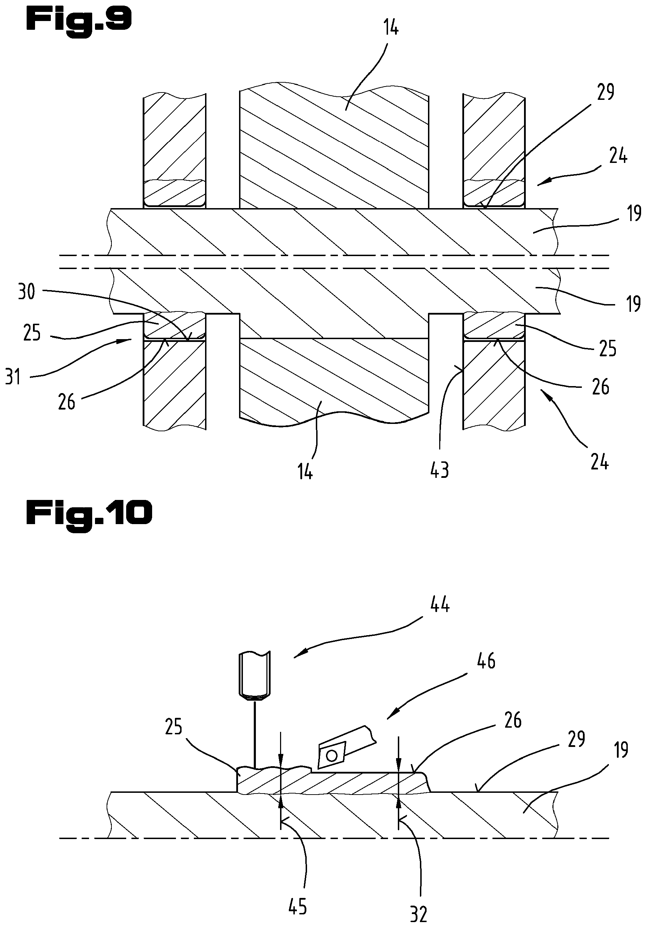

In der Fig. 9 sind zwei weitere und gegebenenfalls für sich eigenständige Ausführungsformen der Gleitlagerung gezeigt, wobei wiederum für gleiche Teile gleiche Bezugszeichen bzw. Bauteilbezeichnungen wie in den vorangegangenen Figuren 2 bis 8 verwendet werden. Um unnötige Wiederholungen zu vermeiden, wird auf die detaillierte Beschreibung in den vorangegangenen Figuren 2 bis 8 hingewiesen bzw. Bezug genommen.

In der oberen Schnitthälfte der Fig. 9 ist das Zahnrad 14 direkt an der Achse 19 aufgenommen und dreht sich somit mit dieser mit. Hierbei ist die Achse 19 drehbar in der Achsaufnahme 24 aufgenommen. Hierbei kann vorgesehen sein, dass an der Innenmantelfläche 30 der Achsaufnahme 24 die Schicht 25 des auftraggeschweißten Materials angeordnet ist. Die Gleitoberfläche 26 der Schicht 25 wirkt somit direkt mit der Außenmantelfläche 29 der Achse 19 zusammen.

Im zweiten Ausführungsbeispiel nach Fig. 9, welches in der unteren Schnitthälfte dargestellt ist, ist das Zahnrad 14 ebenfalls fest mit der Achse 19 verbunden. Die Gleitlagerung zwischen der Achse 19 und der Achsaufnahme 24 ist hierbei derart realisiert, dass an der Außenmantelfläche 29 der Achse 19 die Schicht 25 des auftraggeschweißten Materials aufgetragen ist und somit die Gleitoberfläche 26 ausbildet. Diese Gleitoberfläche 26 wirkt direkt mit der Innenmantelfläche 30 der Bohrung 31 der Achsaufnahme 24 zusammen.

Aufbauend auf den Ausführungsbeispielen der Fig. 9 kann natürlich auch vorgesehen sein, dass an einer Innenfläche 43 der Achsaufnahme 24 ebenfalls eine Schicht 25 eines auftraggeschweißten Materials angeordnet ist. Ein derartiges Ausführungsbeispiel ist jedoch nicht dargestellt.

Weiters kann aufbauend auf dem Ausführungsbeispiel nach Fig. 9 analog zu den bereits beschriebenen Ausführungsbeispielen eine Gleitlagerbuchse 38 vorgesehen sein, dass welche in diesem Fall zwischen der Achsaufnahme 24 und der Achse 19 angeordnet ist. Die Gleitlagerbuchse 38 kann hierbei fest mit der Achse 19 gekoppelt sein und sich somit mit dieser mitdrehen oder in der Achsaufnahme 24 aufgenommen sein, wobei sich die Achse 19 relativ zur Gleitlagerbuchse 38 verdreht.

Fig. 10 zeigt mögliche Verfahrensschritte zum Herstellen der Schicht 25 des auftraggeschweißten Materials. In dem Ausführungsbeispiel nach Fig. 10 wird die Schicht 25 auf die Außenmantelfläche 29 der Achse 19 auftraggeschweißt. Dieselben Verfahrensabläufe werden natürlich auch in den sonstigen beschriebenen Ausführungsbeispielen angewandt.

Wie aus Fig. 10 ersichtlich, kann vorgesehen sein, dass in einem ersten Verfahrensschritt die Schicht 25 mittels einem Schweißkopf 44 auf die Außenmantelfläche 29 der Achse 19 auftraggeschweißt ist. Hierbei kann die Schicht 25 eine Rohschichtdicke 45 aufweisen. In einem anschließenden Verfahrensschritt kann die Schicht 25 mit einem spanabhebenden Bearbeitungswerkzeug 46 bearbeitet werden, sodass die Gleitoberfläche 26 hergestellt werden kann.

Hierdurch wird die finale Schichtdicke 32 hergestellt. Das Bearbeitungswerkzeug 46 kann beispielsweise in Form eines Drehwerkzeuges, in Form eines Fräswerkzeuges oder auch als Schleifscheibe ausgebildet sein. Insbesondere kann auch vorgesehen sein, dass die Schicht 25 in verschiedenen Bearbeitungsschritten bearbeitet wird, sodass beispielsweise die Oberfläche zuerst mittels dem Drehwerkzeug abgetragen wird und anschließend geschliffen wird.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Windkraftanlage | 30 | Innenmantelfläche Bohrung Achs-aufnahme |
| 2 | Turm | | |
| 3 | Gondel | 31 | Bohrung Achsaufnahme |
| 4 | Rotor | 32 | Schichtdicke |
| 5 | Rotorblatt | 33 | zweite Schicht |
| 6 | Generator | 34 | dritte Schicht |
| 7 | Windkraftanlagengetriebe | 35 | Absatz Achse |
| 8 | Netzanschluss | 36 | Stirnfläche Absatz |
| 9 | Sonnenrad | 37 | Stirnfläche Zahnrad |
| 10 | Welle | 38 | Gleitlagerbuchse |
| 11 | Planetenrad | 39 | Außenmantelfläche Gleitlager-buchse |
| 12 | Stirnverzahnung Sonnenrad | | |
| 13 | Stirnverzahnung Planetenrad | 40 | Innenmantelfläche Bohrung Gleit-lagerbuchse |
| 14 | Zahnrad | | |
| 15 | Planetenradachse | 41 | Bohrung Gleitlagerbuchse |
| 16 | Planetenträger | 42 | Stirnfläche Gleitlagerbuchse |
| 17 | erster Aufnahmeabschnitt | 43 | Innenfläche Achsaufnahme |
| 18 | zweiter Aufnahmeabschnitt | 44 | Schweißkopf |
| 19 | Achse | 45 | Rohschichtdicke |
| 20 | Lagersitz | 46 | Bearbeitungswerkzeug |
| 21 | Hohlrad | | |
| 22 | Innenverzahnung | | |
| 23 | Rotorwelle | | |
| 24 | Achsaufnahme | | |
| 25 | erste Schicht | | |
| 26 | Gleitoberfläche | | |
| 27 | Innenmantelfläche Bohrung Zahnrad | | |
| 28 | Bohrung Zahnrad | | |
| 29 | Außenmantelfläche Achse | | |

## Patentansprüche

1. Windkraftanlagengetriebe (7), insbesondere Planetengetriebe, mit zumindest einem Zahnrad (14), das auf einer Achse (19) gelagert ist, wobei zwischen dem Zahnrad (14) und der Achse (19) oder zwischen der Achse (19) und einer Achsaufnahme (24) eine Gleitoberfläche (26) angeordnet ist, wobei die Gleitoberfläche (26) an zumindest einer Schicht (25, 33, 34) aus einem Gleitlagerwerkstoff angeordnet ist, **dadurch gekennzeichnet, dass** die Schicht (25, 33, 34) des Gleitlagerwerkstoffes aus einem auftraggeschweißten Material gebildet ist, wobei die Schicht (25, 33, 34) des auftraggeschweißten Materials direkt auf eine Außenmantelfläche (29) der Achse (19) aufgebracht ist.

2. Windkraftanlagengetriebe nach Anspruch 1, **dadurch gekennzeichnet, dass** an der Achse (19) ein Absatz (35) angeordnet ist und die Schicht (25, 33, 34) des auftraggeschweißten Materials direkt auf eine Stirnfläche (36) des Absatzes (35) aufgebracht ist.

3. Windkraftanlagengetriebe nach einem der vorhergehenden Ansprüche, **dadurch gekennzeichnet, dass** das Zahnrad (14) als Planetenrad (11) ausgebildet ist.

4. Windkraftanlagengetriebe nach einem der vorhergehenden Ansprüche, **dadurch gekennzeichnet, dass** die Schicht (25, 33, 34) des auftraggeschweißten Materials eine Schichtdicke (32) zwischen 0,5mm und 1,5mm, insbesondere zwischen 0,8mm und 1,2mm aufweist.

5. Windkraftanlagengetriebe nach einem der vorhergehenden Ansprüche, **dadurch gekennzeichnet, dass** die Gleitoberfläche (26) an der Schicht (25, 33, 34) des auftraggeschweißten Materials eine gemittelte Rautiefe R_{z} zwischen 0,1 µm und 3,2 µm, insbesondere zwischen 0,5 µm und 1,6 µm aufweist.

6. Windkraftanlagengetriebe nach einem der vorhergehenden Ansprüche, **dadurch gekennzeichnet, dass** das auftraggeschweißte Material aus einem Werkstoff besteht oder diesen umfasst, der ausgewählt ist aus einer Gruppe umfassend Aluminiumbasislegierungen, Zinnbasislegierungen, Bronzebasislegierungen, Messingbasislegierungen.

7. Windkraftanlagengetriebe nach einem der vorhergehenden Ansprüche, **dadurch gekennzeichnet, dass** das auftraggeschweißte Material aus einem Werkstoff besteht oder diesen umfasst, der zumindest zwei Werkstoffe umfasst, die ausgewählt sind aus einer Gruppe umfassend Aluminium, Zinn, Bronze, Messing.

8. Windkraftanlagengetriebe nach einem der vorhergehenden Ansprüche, **dadurch gekennzeichnet, dass** in einem axialen Abstand zueinander versetzt zumindest zwei Schichten (25, 33, 34) des auftraggeschweißten Materials aus unterschiedlichen Werkstoffen ausgebildet sind.

9. Windkraftanlagengetriebe nach einem der vorhergehenden Ansprüche, **dadurch gekennzeichnet, dass** in einem axialen Abstand zueinander versetzt zumindest drei Schichten (25, 33, 34) des auftraggeschweißten Materials aus unterschiedlichen Werkstoffen ausgebildet sind, wobei die Materialen der beiden außenliegenden Schichten (25, 34) eine geringere Druckfestigkeit aufweisen, als das Material einer dazwischenliegenden Schicht (33).

10. Windkraftanlage (1) mit einem Rotor (4) und einem Generator (6), wobei zwischen dem Rotor (4) und dem Generator (6) ein Windkraftanlagengetriebe (7), insbesondere ein Planetengetriebe, angeordnet ist, das in Wirkverbindung mit dem Rotor (4) und dem Generator (6) steht, **dadurch gekennzeichnet, dass** das Windkraftanlagengetriebe (7) entsprechend einem der vorhergehenden Ansprüche ausgebildet ist.

11. Verfahren zum Herstellen eines Windkraftanlagengetriebes (7), insbesondere Planetengetriebes, mit zumindest einem Zahnrad (14), das auf einer Achse (19) gelagert ist, wobei zwischen dem Zahnrad (14) und der Achse (19) eine Gleitoberfläche (26) angeordnet ist, wobei das Verfahren folgende Verfahrensschritte umfasst:
- Bereitstellen des Zahnrades (14) oder der Achse (19) oder einer Gleitlagerbuchse (38);
- Bilden der Gleitoberfläche (26) an einer Schicht (25, 33, 34) eines Gleitlagerwerkstoffes, **dadurch gekennzeichnet, dass** die Schicht (25, 33, 34) durch Auftragschweißen des Gleitlagerwerkstoffes direkt auf die Achse (19) gebildet wird.

12. Verfahren nach Anspruch 11, **dadurch gekennzeichnet, dass** beim Auftragschweißen die Schicht (25, 33, 34) in einer Rohschichtdicke (45) zwischen 1mm und 5mm, insbesondere zwischen 1,5mm und 3mm aufgetragen wird und dass die Schicht (25, 33, 34) des auftraggeschweißten Materials in einem anschließenden Bearbeitungsschritt mittels spanabhebender Bearbeitung auf eine Schichtdicke (32) zwischen 0,5mm und 1,5mm, insbesondere zwischen 0,8mm und 1,2mm abgetragen wird.

13. Verfahren nach Anspruch 12, **dadurch gekennzeichnet, dass** das Auftragschweißen und die spanabhebende Bearbeitung in einer Werkstückaufspannung erfolgt.

## Claims

1. A wind turbine gearbox (7), in particular planetary gearbox, having at least one gear (14) which is mounted on an axle (19), wherein a sliding surface (26) is arranged between the gear (14) and the axle (19) or between the axle (19) and an axle holder (24), wherein the sliding surface (26) is arranged on at least one layer (25, 33, 34) made of a sliding bearing material, **characterized in that** the layer (25, 33, 34) of the sliding bearing material is formed of a clad material, wherein the layer (25, 33, 34) of the clad material is applied directly to an outer shell surface (29) of the axle (19).

2. The wind turbine gearbox according to claim 1, **characterized in that** an offset (35) is arranged on the axle (19) and the layer (25, 33, 34) of the clad material is applied directly to the end face (36) of the offset (35).

3. The wind turbine gearbox according to one of the preceding claims, **characterized in that** the gear (14) is designed as a planetary gear (11).

4. The wind turbine gear box according to one of the preceding claims, **characterized in that** the layer (25, 33, 34) of the clad material has a layer thickness (32) of between 0.5 mm and 1.5 mm, in particular between 0.8 mm and 1.2 mm.

5. The wind turbine gear box according to one of the preceding claims, **characterized in that**, on the layer (25, 33, 34) of the clad material, the sliding surface (26) has an averaged roughness depth Rz of between 0.1 µm and 3.2 µm, in particular between 0.5 µm and 1.6 µm.

6. The wind turbine gearbox according to one of the preceding claims, **characterized in that** the clad material consists of or comprises a material selected from a group comprising aluminum base alloys, tin base alloys, bronze base alloys, brass base alloys.

7. The wind turbine gearbox according to one of the preceding claims, **characterized in that** the clad material consists of or comprises a material which comprises at least two materials selected from a group comprising aluminum, tin, bronze, brass.

8. The wind turbine gearbox according to one of the preceding claims, **characterized in that** at least two layers (25, 33, 34) of the clad material, offset to one another at an axial distance, are formed of different materials.

9. The wind turbine gearbox according to one of the preceding claims, **characterized in that** at least three layers (25, 33, 34) of the clad material, offset to one another at an axial distance, are formed of different materials, wherein the materials of the two outer layers (25, 34) have a lower degree of compressive strength than the material of an intermediate layer (33).

10. A wind turbine (1) having a rotor (4) and a generator (6), wherein a wind turbine gearbox (7), in particular a planetary gearbox, which is operatively connected to the rotor (4) and the generator (6) is arranged between the rotor (4) and the generator (6), **characterized in that** the wind turbine gearbox (7) is designed according to one of the preceding claims.

11. A method for producing a wind turbine gearbox (7), in particular planetary gearbox, having at least one gear (14) which is mounted on an axle (19), wherein a sliding surface (26) is arranged between the gear (14) and the axle (19), wherein the method comprises the following steps:
- providing the gear (14) or the axle (19) or a sliding bearing bushing (38);
- forming the sliding surface (26) on a layer (25, 33, 34) of a sliding bearing material, **characterized in that** the layer (25, 33, 34) is formed by cladding of the sliding bearing material directly onto the axle (19).

12. The method according to claim 11, **characterized in that** when cladding, the layer (25, 33, 34) is applied having a raw layer thickness (45) of between 1 mm and 5 mm, in particular between 1.5 mm and 3 mm, and that the layer (25, 33, 34) of the clad material is skimmed in a subsequent processing step, by means of machining, to a layer thickness (32) of between 0.5 mm and 1.5 mm, in particular between 0.8 mm and 1.2 mm.

13. The method according to claim 12, **characterized in that** the cladding and the machining are carried out in one workpiece setting.

## Revendications

1. Transmission d'éolienne (7), en particulier engrenage planétaire, avec au moins une roue dentée (14) qui est supportée sur un axe (19), une surface de glissement (26) étant disposée entre la roue dentée (14) et l'axe (19) ou entre l'axe (19) et un logement d'axe (24), la surface de glissement (26) étant disposée sur au moins une couche (25, 33, 34) en matériau de palier lisse, **caractérisée en ce que** la couche (25, 33, 34) du matériau de palier lisse est formée d'une matière soudée par rechargement, la couche (25, 33, 34) de la matière soudée par rechargement étant appliquée directement sur une surface d'enveloppe extérieure (29) de l'axe (19).

2. Transmission d'éolienne selon la revendication 1, **caractérisée en ce qu'**un épaulement (35) est disposé sur l'axe (19), et la couche (25, 33, 34) de la matière soudée par rechargement est appliquée directement sur une face frontale (36) de l'épaulement (35).

3. Transmission d'éolienne selon l'une des revendications précédentes, **caractérisée en ce que** la roue dentée (14) est constituée en tant que roue planétaire (11).

4. Transmission d'éolienne selon l'une des revendications précédentes, **caractérisée en ce que** la couche (25, 33, 34) de la matière soudée par rechargement présente une épaisseur de couche (32) entre 0,5 mm et 1,5 mm, en particulier entre 0,8 mm et 1,2 mm.

5. Transmission d'éolienne selon l'une des revendications précédentes, **caractérisée en ce que** la surface de glissement (26) sur la couche (25, 33, 34) de la matière soudée par rechargement présente une profondeur de rugosité R_{z} entre 0,1 µm et 3,2 µm, en particulier entre 0,5 µm et 1,6 µm.

6. Transmission d'éolienne selon l'une des revendications précédentes, **caractérisée en ce que** la matière soudée par rechargement se compose d'un matériau, ou comprend celui-ci, qui est sélectionné dans un groupe comprenant des alliages à base d'aluminium, des alliages à base d'étain, des alliages à base de bronze, des alliages à base de laiton.

7. Transmission d'éolienne selon l'une des revendications précédentes, **caractérisée en ce que** la matière soudée par rechargement se compose d'un matériau, ou comprend celui-ci, qui comprend au moins deux matériaux qui sont sélectionnés dans un groupe comprenant l'aluminium, l'étain, le bronze, le laiton.

8. Transmission d'éolienne selon l'une des revendications précédentes, **caractérisée en ce qu'**au moins deux couches (25, 33, 34) de la matière soudée par rechargement, disposées de façon décalée avec une distance axiale entre elles, sont constituées de différents matériaux.

9. Transmission d'éolienne selon l'une des revendications précédentes, **caractérisée en ce qu'**au moins trois couches (25, 33, 34) de la matière soudée par rechargement, disposées de façon décalée avec une distance axiale entre elles, sont constituées de différents matériaux, les matières des deux couches (25, 34) extérieures présentant une résistance à la pression plus faible que la matière d'une couche (33) intermédiaire.

10. Etolienne (1) avec un rotor (4) et un générateur (6), une transmission d'éolienne (7), en particulier un engrenage planétaire, étant disposée entre le rotor (4) et le générateur (6), laquelle transmission est en liaison opératoire avec le rotor (4) et le générateur (6), **caractérisée en ce que** la transmission d'éolienne (7) est constituée selon l'une des revendications précédentes.

11. Procédé de fabrication d'une transmission d'éolienne (7), en particulier d'un engrenage planétaire, avec au moins une roue dentée (14) qui est supportée sur un axe (19), une surface de glissement (26) étant disposée entre la roue dentée (14) et l'axe (19), le procédé comprenant les étapes de procédé suivantes :
- fourniture de la roue dentée (14) ou de l'axe (19) ou d'un coussinet de palier lisse (38);
- formation de la surface de glissement (26) sur une couche (25, 33, 34) d'un matériau de palier lisse,
**caractérisé en ce que** la couche (25, 33, 34) est formée par soudage par rechargement du matériau de palier lisse directement sur l'axe (19).

12. Procédé selon la revendication 11, **caractérisé en ce que**, lors du soudage par rechargement, la couche (25, 33, 34) est appliquée en une épaisseur de couche brute (45) entre 1 mm et 5 mm, en particulier entre 1,5 mm et 3 mm, et **en ce que** la couche (25, 33, 34) de la matière soudée par rechargement est enlevée dans une étape d'usinage consécutive au moyen d'un usinage par enlèvement de matière pour atteindre une épaisseur de couche (32) entre 0,5 mm et 1,5 mm, en particulier entre 0,8 mm et 1,2 mm.

13. Procédé selon la revendication 12, **caractérisé en ce que** le soudage par rechargement et l'usinage par enlèvement de matière s'effectuent dans un serrage de pièce.
